Europäisches Patentamt

European Patent Office

Office européen des brevets

(19)

(11) Publication number: **0 464 982 A1**

## (12) EUROPEAN PATENT APPLICATION

(21) Application number: **91302420.4**

(22) Date of filing: **20.03.91**

(51) Int. Cl.5: **B62K 5/04**, B62D 61/08

(30) Priority: **27.06.90 GB 9014314**

(43) Date of publication of application:
**08.01.92 Bulletin 92/02**

(84) Designated Contracting States:
**DE FR GB SE**

(71) Applicant: **VESSA LIMITED**
**Silvertown House, Vincent Square**
**London SW1P 2PL(GB)**

(72) Inventor: **Maxwell, Ewan**
**122 Rufus Gardens**
**Totton, Southampton SO4 3TB(GB)**

(74) Representative: **Treves, Barry William et al**
**BTR Group Patent & Trade Mark Service P.O.**
**Box 504**
**Erdington Birmingham B24 9OH(GB)**

(54) **Wheeled vehicle.**

(57) A vehicle, particularly three-wheeled, for use by an invalided or disabled person has a drive unit mounted mainly on top of its chassis and within the imaginary cylinder defined by the two rear wheels (2, 3). The chassis includes a horizontal pivot (7) allowing the rear part (6), and the drive unit mounted thereon to be folded through 180° underneath the front part. The rear part may be "driven", in this position. When the seat (22) and steering column (12) are detached, the remainder is very compact and much more easily stored in, for example, a car boot or a cupboard.

Fig.1

This invention relates to a wheeled vehicle. In particular it relates to a collapsible vehicle as used by a disabled or invalided person.

Various forms of such vehicles are known but usually are difficult to collapse or fold up and reassemble quickly and/or are not capable of being folded up or collapsed readily to a sufficiently small size to fit readily into a car boot or a cupboard for storage.

It is an object of the present invention to provide a wheeled vehicle which does not suffer from these disadvantages.

In accordance with the present invention a wheeled vehicle comprises a chassis having a front part and a rear part, at least one steerable front wheel and two rear wheels of equal diameter mounted coaxially one on each side of the rear part of the chassis and a drive unit mounted on the rear part between the two rear wheels in a location where most, if not the whole of the unit is within an imaginary cylinder defined by the rear wheels, the arrangement being that the rear part and the drive unit mounted thereon may be moved to a position underneath the front part.

Preferably the front part and the rear part are pivotally attached to one another, and the rear part and drive unit mounted thereon may be moved to a position underneath the front part with all wheels remaining in contact with the ground. The vehicle may be driven with the rear wheels and drive unit in this position.

Preferably the front wheel comprises part of a front wheel assembly including for example a column, forks and handlebars, which assembly may be detached from the vehicle for storage purposes.

Preferably also a detachable passenger seat is located above the drive unit.

One embodiment of the invention will now be described by way of example only with reference to the accompanying drawings, of which:-

Figure 1 shows a general perspective view of the vehicle in accordance with the invention, parts being omitted for clarity,

Figures 2, 3, 4 and 5 show, in simplified diagrammatic form, the various stages of folding the vehicle from a driving to a storage position, and

Figure 6 shows the rear part of the vehicle as shown in Figure 2 on an enlarged scale.

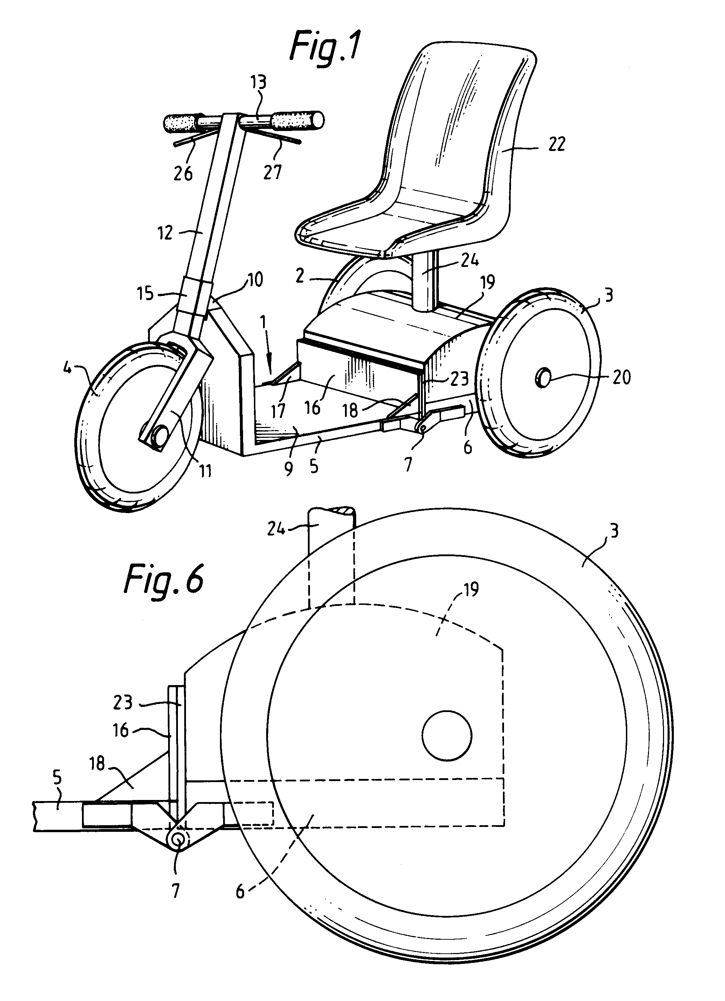

As shown particularly in Figure 1 the vehicle comprises a chassis 1, two rear wheels 2 and 3, and a steerable front wheel 4.

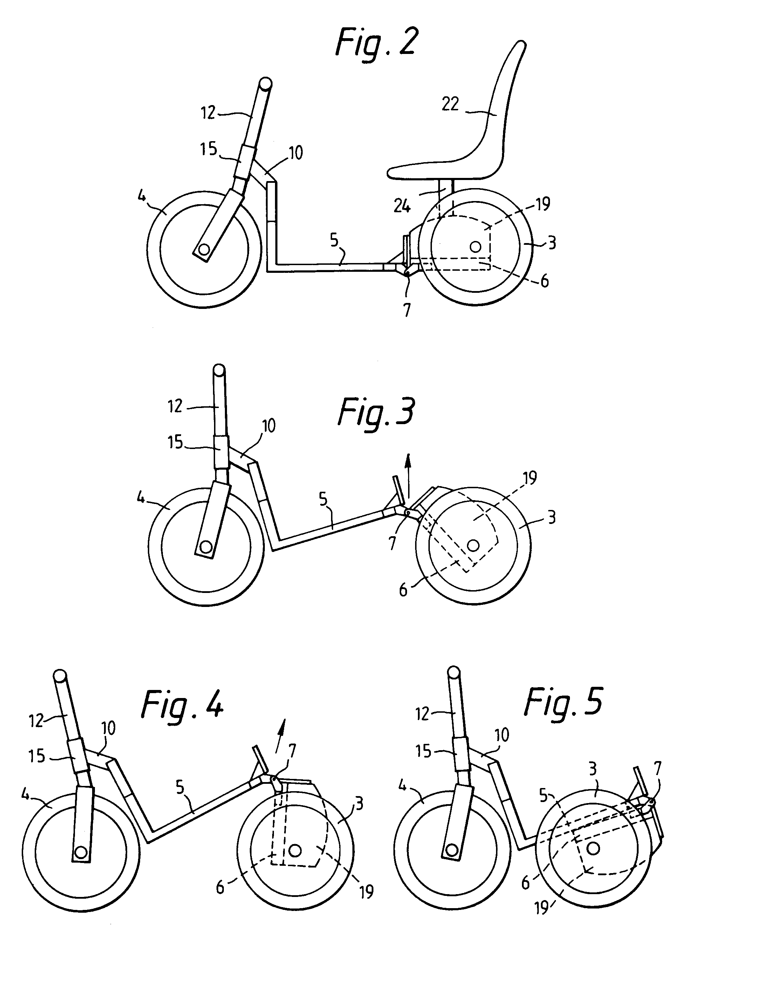

The chassis 1 comprises a front part 5 and a rear part 6, pivotally attached to one another by means of a horizontal pivot 7 located generally in front of the forward extremity of the two rear wheels. A clamping means (not shown) holds the rear part in the driving position shown in Figures 1 and 2, i.e. as a direct rearwards extension of the front part 6, but may be released to allow the rear part to be pivoted with respect to the front part as will be described below.

The front part 5 of the chassis 1 consists of a rectangular framework of square or rectangular section tubes supporting a generally horizontal floor 9 on which the driver may rest his or her feet when the vehicle is moving. At the front of the floor there is an upright framework 10 which includes a head 15 which supports the front wheel assembly which comprises the steerable front wheel 4, forks 11 on which the front wheel is mounted, a steering column 12 and handlebars 13. The head 15 comprises a quick release mechanism (not shown) enabling the whole of the front wheel assembly to be detached from the remainder of the vehicle.

At the rear of the front part 5 of the chassis 1 is a horizontal pivot 7 which lies slightly below the plane of the horizontal floor as shown particularly in Figure 6. Extending upwardly from the rear of the front part is a rectangular plate 16 supported by side webs 17 and 18 and/or struts. This plate 16 faces a similar plate 23 extending upwardly from the front of the rear part 6. The two plates are normally held together by a quick release clamping mechanism (not shown) which on release allows the rear part to rotate about the pivot 7 as will be described.

Braking and accelerating controls in the form of pedals are provided on the floor, but for clarity are omitted from the drawings. Alternatively or additionally control levers 26, 27 may be mounted on the handlebars 13.

The rear part 6 comprises a generally horizontal framework forming a generally rearwards extension of the floor of the front part and carries an axle unit 20 on which are mounted the two rear wheels 2 and 3, one on each side of the rear part. The rear part also comprises an upwardly extending framework (not shown) supporting a drive unit (not shown) in a housing 19 and, above the drive unit, a seat 22. As mentioned above, at the front of the rear part there is a rectangular plate 23 which extends upwardly. This plate is supported by webs and/or struts. The seat is mounted on a column 24 above the drive unit and may be quickly detached therefrom by a suitable quick release mechanism (not shown).

As can be seen in Figures 2 to 6 the drive unit is located in a housing 19 which is positioned mainly within the imaginary cylinder defined by the two rear wheels 2 and 3. When the quick release mechanism holding the two plates 16 and 23, one at the rear of the front part of the chassis, and the other at the front of the rear part of the chassis, is released and the seat 22 and its column 24 detached, the whole of the rear part may be folded under the front part by rotating it about the pivot 7 through approximately 180° as shown in the various stages in Figures 2 to 5. To assist this operation the rear wheels 2, 3 may be driven towards the front wheel 4 by the drive unit. As can be seen by comparing the relative positions of the wheels shown in Figures 2 and 5, the rear wheels move forward by a distance which is at least equal to their diameter. The vehicle in the folded position shown in Figure 5 may be driven to a storage location e.g. up steps into a house and thence into a cupboard or up a ramp into the rear of a car. The vehicle may be stored as required in this condition, since it now takes up less storage space than when the chassis is unfolded (as shown in Figure 2) or alternatively the front wheel assembly may be detached, thus enabling the vehicle to take up much less storage space.

**Claims**

1. A wheeled vehicle comprising a chassis (1) having a front part (5) and a rear part (6), at least one steerable front wheel (4), and two rear wheels (2,3) of equal diameter mounted coaxially one on each side of the rear part of the chassis (1) characterised by a drive unit mounted on the rear part between the two rear wheels (2,3) in a location where most, if not the whole of the unit is within an imaginary cylinder defined by the rear wheels (2,3), the arrangement being that the rear part (6) and the drive unit mounted thereon may be moved to a position underneath the front part (5).

2. A wheeled vehicle according to Claim 1 characterised in that the front part (5) and the rear part (6) are pivotally attached to one another.

3. A wheeled vehicle according to Claim 1 or 2 characterised in that the arrangement is that the rear part (6) and the drive unit mounted thereon may be moved to a position underneath the front part (5) with all wheels (2,3,4) remaining in contact with the ground.

4. A wheeled vehicle according to Claim 1 or 2 characterised in that the arrangement that the rear part (6) and the drive unit mounted thereon may be moved to a position underneath the front part (5) with all wheels remaining in contact with the ground, and the vehicle may be driven with the rear part (6) and drive unit in said position.

5. A wheeled vehicle according to any one of the preceding claims characterised in that the rear wheels (2,3) are movable to a position at least one wheel's diameter length closer to the front wheel (4).

6. A wheeled vehicle according to any one of the preceding claims characterised by comprising a front wheel assembly including a front wheel (4), which assembly may be detached from the vehicle for storage purposes.

7. A wheeled vehicle according to Claim 6 characterised in that the front wheel assembly includes a column (12), forks (11) and handlebars (13).

8. A wheeled vehicle according to any one of the preceding claims characterised in that a detachable passenger seat (22) is located above the drive unit.

Fig.1

Fig.6

Fig. 2

Fig. 3

Fig. 4

Fig. 5

European
Patent Office

EUROPEAN SEARCH
REPORT

Application Number

EP 91 30 2420

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 453 070 (HONDA GIKEN KOGYO K.K.)<br>* page 3, line 5 - page 5, line 18; figures 1,3,4 *<br>– – – | 1,2,5-8 | B 62 K 5/04<br>B 62 D 61/08 |
| Y,A | US-A-4 457 529 (L.SHAMIE)<br>* the whole document *<br>– – – | 1,2,5-8,3 | |
| A | GB-A-1 003 094 (ZWEIRAD UNION A.G.)<br>* page 2, line 16 - line 70; figures 1-3 *<br>– – – | 1-3,5 | |
| A | US-A-4 852 898 (T.DONOGHUE)<br>* the whole document *<br>– – – – – | 1-3,5,7,8 | |

|  |
|---|
| TECHNICAL FIELDS SEARCHED (Int. Cl.5) |
| B 62 K<br>B 62 D<br>B 62 M<br>A 61 G<br>A 63 B |

The present search report has been drawn up for all claims

| Place of search | Date of completion of search | Examiner |
|---|---|---|
| The Hague | 25 September 91 | CZAJKOWSKI A.R. |